# EUROPEAN PATENT APPLICATION

(11) **EP 4 349 456 A1**
(43) Date of publication of application: **10.04.2024**
(21) Application number: 23200425.9
(22) Date of filing: 28.09.2023
(51) Int. Cl.: B01D 53/32, B01D 47/02, B01D 53/78

(54) **EXHAUST GAS TREATMENT APPARATUS**

(30) Priority: 04.10.2022 JP 2022160359
(71) Applicant: EBARA CORPORATION, Ota-ku, Tokyo 144-8510 (JP)
(72) Inventor: SHAMOTO, Mitsuhiro, Tokyo (JP); KYOTANI, Takashi, Tokyo (JP)
(74) Representative: Schmidbauer, Andreas Konrad

(57) **Abstract**

An exhaust-gas treatment apparatus capable of efficiently making a harmful gas containing in an exhaust gas harmless without increasing a size of the apparatus is disclosed. The exhaust-gas treatment apparatus includes a main body in which a flow passage is formed for a liquid to flow, an exhaust-gas supply line to be coupled to the main body, and for supplying the exhaust gas to the flow passage through which the liquid flows, a suction device configured to suck the exhaust gas from the exhaust-gas supply line into the flow passage, a low-temperature plasma generator for generating low-temperature plasma in the flow passage to decompose the harmful gas, and a discharge line for discharging the exhaust gas, which has passed through the low-temperature plasma generator, from the main body.

## Description

### BACKGROUND OF THE INVENTION

### Field of the Invention:

The present invention relates to an exhaust-gas treatment apparatus for decomposing and treating an exhaust gas containing gases harmful for human body (e.g., silane gas (SiH4)) and/or harmful for environment (e.g., global warming gas, and ozonedepleting gas).

### Description of the Related Art:

In various industrial fields, gases that are harmful for human body and/or harmful for the environment (hereinafter collectively referred to simply as "harmful gas") have been used. For example, semiconductor manufacturing apparatus discharges an exhaust gas containing harmful gas having flammability, such as silane gas (SiH₄), or halogen-based harmful gases, such as NF₃, ClF₃, SF₆, CHF₃, C₂F₆, CF₄.

Such exhaust gas cannot be directly emitted into the atmosphere. Therefore, it is generally practiced to introduce the exhaust gas including harmful gas to an exhaust-gas treatment apparatus to make the harmful gas harmless. As a method for treating and making the exhaust gas harmless, for example, combustion treatment in which the harmful gas is combusted using a flame generated by a burner (see, e.g., Patent Document 1) is widely used. Further, plasma treatment, in which thermal plasma is generated in a plasma generator and the exhaust gas is decomposed by this thermal plasma, is also used.

### Citation List

### Patent Literature

Patent document 1: Japanese laid-open patent publication No. 2008-161861

In either combustion treatment or plasma treatment, a treatment section for exhaust gas becomes high in temperature. More specifically, in combustion treatment, a burner itself where the flame is generated, and surrounding areas thereof become high in temperature, resulting in significant wear and tear on the burner itself and devices near the burner. In plasma treatment, a plasma generator for generating thermal plasma and surrounding areas thereof become high in temperature, resulting in significant wear and tear on the plasma generator itself, such as the plasma electrodes, and devices near the plasma generator.

Further, in either combustion treatment or plasma treatment, the exhaust gas treated becomes very high in temperature, so a facility for cooling the exhaust gas treated (e.g., a scrubber) is required. Depending on types of harmful gas contained in the exhaust gas to be treated, the exhaust gas after combustion treatment or plasma treatment may include by-products, such as dust (e.g., silicon dioxide) and corrosive gases (e.g., hydrogen fluoride). A facility is also required to remove these by-products from the exhaust gas treated. Therefore, in conventional exhaust-gas treatment methods, an apparatus tends to be large in size, and the exhaust-gas treatment apparatus may become an expensive facility.

### SUMMARY OF THE INVENTION

It is therefore an object of the present invention to provide an exhaust-gas treatment apparatus capable of efficiently making a harmful gas containing in an exhaust gas harmless without increasing a size of the apparatus.

In an embodiment, there is provided an exhaust-gas treatment apparatus for making harmful gas contained in an exhaust gas harmless, comprising: a main body in which a flow passage is formed for a liquid to flow; an exhaust-gas supply line to be coupled to the main body, and for supplying the exhaust gas to the flow passage through which the liquid flows; a suction device configured to suck the exhaust gas from the exhaust-gas supply line into the flow passage; a low-temperature plasma generator for generating low-temperature plasma in the flow passage to decompose the harmful gas; and a discharge line for discharging the exhaust gas, which has passed through the low-temperature plasma generator, from the main body.

In an embodiment, there is provided an exhaust-gas treatment apparatus for making harmful gas contained in an exhaust gas harmless, comprising: a main body in which a flow passage is formed for a liquid to flow; an exhaust-gas supply line to be coupled to the main body, and for supplying the exhaust gas to the flow passage through which the liquid flows; a suction device configured to suck the exhaust gas from the exhaust-gas supply line into the flow passage; a low-temperature plasma generator for generating low-temperature plasma in the exhaust-gas supply line to decompose the harmful gas; and a discharge line for discharging the exhaust gas, containing the harmful gas which has been decomposed by the low-temperature plasma, from the main body.

In an embodiment, the suction device includes an ejector arranged in the flow passage upstream of the low-temperature plasma generator as viewed in a flow direction of the liquid, and a driving fluid for the ejector is the liquid.

In an embodiment, the suction device includes an ejector arranged in the discharge line, and supplying a drive fluid to the ejector causes the internal space of the main body to be depressurized, thereby sucking the exhaust gas from the exhaust-gas supply line into the main body.

In an embodiment, the exhaust-gas treatment apparatus further comprises: a recirculating flow mechanism configured to reverse part of the liquid and the exhaust gas flowing in the flow passage to thereby increase a time during which the liquid and the exhaust gas remain in the low-temperature plasma generator; wherein the recirculating flow mechanism includes: a first taper tube coupled to a wall surface of the flow passage, and having a reduced diameter toward an upstream side of the flow direction of the liquid; and a second taper tube arranged upstream of the first taper tube as viewed in the flow direction of the liquid and with a gap from the flow passage, and dividing the liquid and the exhaust gas into a first flow toward a wall surface of the flow passage and a second flow flowing in a central portion of the flow passage; and the first taper tube causes the first flow to flow back in the flow passage toward the second flow.

In an embodiment, the plasma generator includes: a high-voltage power supply device; and at least a pair of first electrode and second electrode disposed in the flow passage; and the high-voltage power supply device causes low temperature plasma to be generated between the first electrode and the second electrode.

In an embodiment, the plasma generator includes: a microwave generator capable of emitting microwaves; a waveguide for propagating the microwaves; a matching section located in the waveguide to adjust impedance of the microwaves; and a slot antenna for concentrating electric fields generated by the microwaves; and the exhaust gas in the liquid is turned into low-temperature plasma at a surface of the slot antenna.

In an embodiment, some or all of outer surface of the first electrode and/or the second electrode is coated with a dielectric material.

In an embodiment, the harmful gas is fluorine compounds, nitrogen compounds, or silane compounds, and the liquid is pure water, ultrapure water, ion-exchanged water, or electrolytic solution.

In an embodiment, during treating of the exhaust gas, an ambience of an internal space of the main body is maintained at atmospheric pressure or quasi-atmospheric pressure.

In an embodiment, the exhaust-gas supply line extends from a vacuum pump coupled to a process chamber of semiconductor manufacturing apparatus to the main body, or extends from an exhaust-gas treatment apparatus coupled to the vacuum pump to the main body.

In an embodiment, the exhaust-gas supply line is incorporated into or integrated with a vacuum pump coupled to a process chamber of a semiconductor manufacturing apparatus, and the main body is directly coupled to the vacuum pump.

In an embodiment, the discharge line extends from the main body to a wet type exhaust gas treatment apparatus, a combustion type exhaust gas treatment apparatus, or a dry type exhaust gas treatment apparatus.

In an embodiment, at least one exhaust gas inlet for introducing the exhaust gas into the liquid is formed in the second electrode, and the exhaust-gas supply line is coupled to the second electrode in which the exhaust-gas inlet is formed.

In an embodiment, the plasma generator includes: a plurality of pairs of first electrode and the second electrode, or the first electrode having a plurality of electrode rods and the second electrode.

According to the present invention, the harmful gas is decomposed by low-temperature plasma, thus eliminating the need for cooling facilities (e.g., scrubber) which are required in the conventional exhaust-gas treatment apparatus, and making it possible to downsize the exhaust-gas treatment apparatus.

### BRIEF DESCRIPTION OF THE DRAWINGS

FIG. 1 is a schematic view showing an exhaust-gas treatment apparatus according to an embodiment;
FIG. 2 is a schematic view showing a low-temperature plasma generator according to an embodiment;
FIG. 3 is a schematic view showing the low-temperature plasma generator according to another embodiment;
FIG. 4 is a schematic view showing an example of a recirculating flow mechanism arranged in a main body;
FIG. 5 is a schematic view showing the exhaust gas treatment apparatus according to another embodiment;
FIG. 6A is a perspective view showing a second electrode according to another embodiment;
FIG. 6B is a perspective view showing the second electrode according to still another embodiment;
FIG. 7A is a perspective view showing a first electrode according to another embodiment;
FIG. 7B is a perspective view showing the first electrode according to still another embodiment;
FIG. 8 is a schematic view showing the exhaust-gas treatment apparatus according to still other embodiment; and
FIG. 9 is a view showing an example of an exhaust-gas treatment process system in which the exhaust-gas treatment apparatuses are arranged.

### DESCRIPTION OF EMBODIMENTS

Hereinafter, embodiments according to the present invention will be described with reference to the drawings.

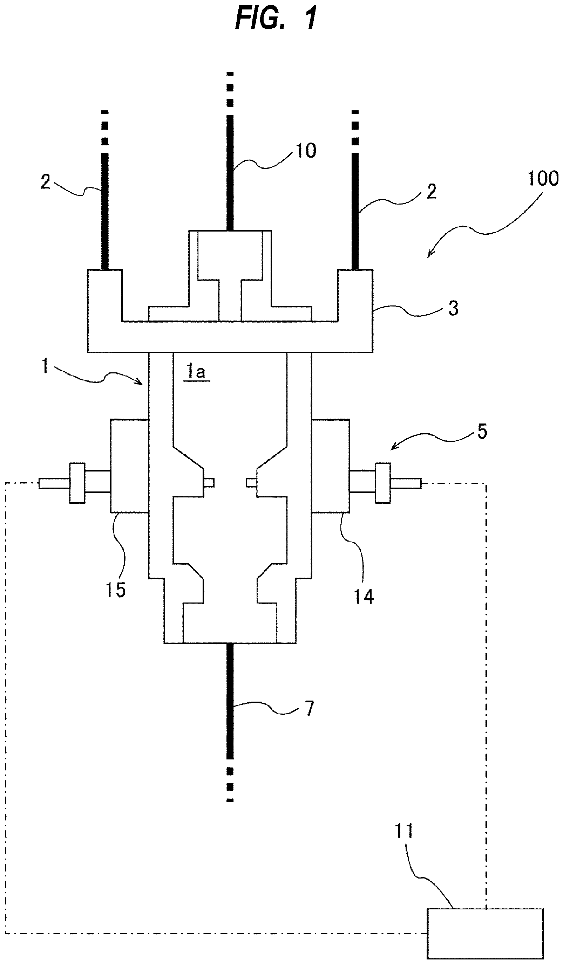

FIG. 1 is a schematic view showing an exhaust-gas treatment apparatus according to an embodiment. The exhaust-gas treatment apparatus shown in FIG. 1 is an apparatus for making harmful gas contained in an exhaust gas harmless. The exhaust gas is, for example, discharged from a process chamber of semiconductor manufacturing apparatus, and introduced into the exhaust-gas treatment apparatus. The harmful gas includes, for example, fluorine compounds, such as CF₄, C₂F₆, SF₆, NF₃, ClF₃, and HF, halogen compounds, such as HBr, and Cl₂, nitrogen compounds, such as NH₃, and NOx, or silane compounds, such as SiH4, DCS (dichlorosilane), and TEOS (tetraethyl orthosilicate).

The exhaust-gas treatment apparatus 100 shown in FIG. 1 includes: a main body 1 having a flow passage 1a through which a liquid flows; a liquid supply line 10 which is coupled to the main body 1 and supplies the liquid to the flow passage 1a; an exhaust-gas supply line 2 which is coupled to the main body 1 and supplies an exhaust gas to the flow passage 1a through which the liquid flows; a suction device 3 which sucks the exhaust gas from the exhaust-gas supply line 2 to the flow passage 1a; a low-temperature plasma generator 5 for generating a low-temperature plasma in the flow passage 1a to decompose harmful gas; and a discharge line 7 for discharging the exhaust gas, which has passed through the low-temperature plasma generator 5, from the main body 1. The liquid is supplied to the flow passage 1a of the main body 1 through the liquid supply line 10. The type of liquid supplied to the flow passage 1a is appropriately selected depending on the harmful gas in the exhaust gas sucked into the flow passage 1a from the exhaust-gas supply line 2. Examples of liquid may include pure water, ultrapure water, and ion-exchanged water. In one embodiment, the liquid may be electrolytic solution or alcohol. In this embodiment, the discharge line 7 discharges not only the exhaust gas treated, but also the liquid.

The main body 1 shown in FIG. 1 has a cylindrical shape extending vertically, and the flow passage 1a also extends vertically within the main body 1. In this embodiment, the suction device 3 is an ejector which is disposed in the main body 1 and uses the liquid flowing in the flow passage 1a as the driving fluid. The exhaust-gas supply line 2 is coupled to the main body 1 through the suction device 3. In the ejector serving as the suction device 3, the exhaust gas flowing in the exhaust-gas supply line 2 is treated as a suction gas for the suction device 3. More specifically, flowing the liquid in the suction device 3 causes the exhaust gas to be sucked into the flow passage 1a of the main body 1 through the exhaust-gas supply line 2, and to be mixed with the liquid in the suction device 3. In this process, the exhaust gas is mixed with the liquid as bubbles, and the liquid containing the exhaust gas as bubbles is discharged from the suction device 3 into the flow passage 1a. In this embodiment, the ambience of flow passage 1a, which is the internal space of the main body 1, is maintained at atmospheric pressure or quasi-atmospheric pressure.

Although two exhaust-gas supply lines 2 are illustrated in FIG. 1, the number of exhaust-gas supply lines 2 can be determined in accordance with a suction capacity of exhaust gas provided by suction device 3, and a treatment capacity (decomposition capacity) of harmful gas provided by the low-temperature plasma generator 5. In other words, the exhaust-gas treatment apparatus 100 has at least one exhaust-gas supply line 2.

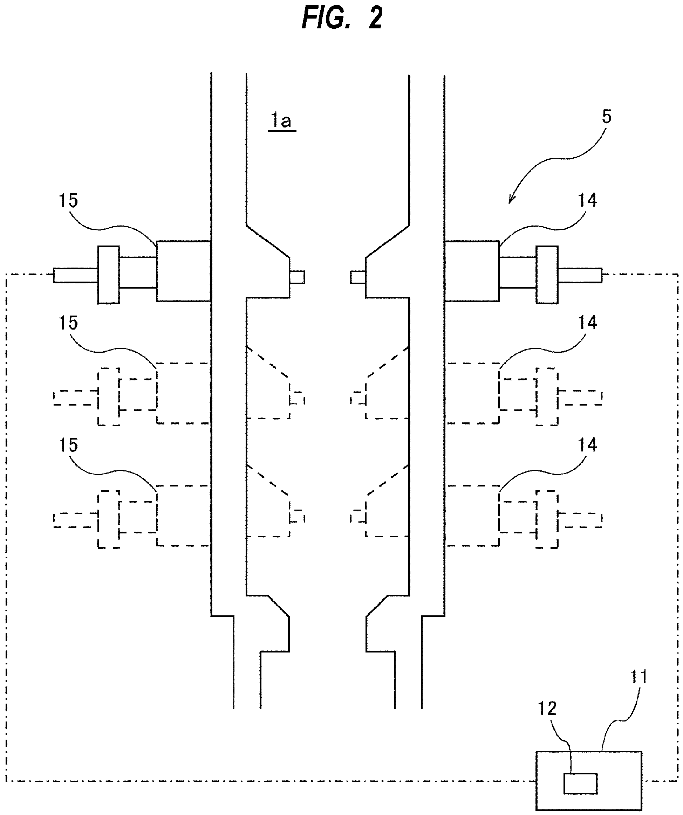

The low-temperature plasma generator 5 is provided in the main body 1 downstream of the suction device 3, as viewed in a flow direction of the liquid flowing in the flow passage 1a, and generates low-temperature plasma in the exhaust gas contained in the liquid flowing in the flow passage 1a. FIG. 2 is a schematic view showing a low-temperature plasma generator according to an embodiment. The low-temperature plasma generator 5 shown in FIG. 2 includes a high-voltage power supply device 11, and a first electrode 14 and a second electrode 15 which are arranged in the liquid flowing in the flow passage 1a. The first electrode 14 and the second electrode 15 are coupled to the high-voltage power supply device 11, respectively. The high-voltage power supply device 11 is operated to generate low-temperature plasma in the exhaust gas contained in the liquid flowing between the first electrode 14 and the second electrode 15.

Low-temperature plasma generally refers to so-called "weakly ionized plasma", in which electron density or density of neutral particles in the plasma is low, so that electron mean free path is long and the electrons have high energy of 1 to 10 eV (equivalent to 10,000 to -10,000 K), while the neutral particles remain at about room temperature. A discharge phenomenon generated between the first electrode 14 and the second electrode 15 by the high-voltage power supply device 11 for generating such low-temperature plasma in the liquid is, for example, glow discharge.

In order to generate an electrical discharge phenomenon between the first electrode 14 and the second electrode 15, the high-voltage power supply device 11 includes a high-voltage power source 12 for applying a voltage having a pulse waveform to the first electrode 14 and the second electrode 15. Examples of high-voltage power source 12 may include a DC power source, an AC power source, a bipolar power source, a unipolar power source, a pulse power source, or a high-frequency power source. Depending on the type of high-voltage power source 12, the high-voltage power supply device 11 may include a pulse generator (not shown).

As shown by virtual lines (dotted lines) in FIG. 2, the low-temperature plasma generator 5 may have a plurality of pairs (three pairs in FIG. 2) of first and second electrodes 14, 15. In this embodiment shown in FIG. 2, the high-voltage power source 12 provides pulse voltages to all or any pair of first and second electrodes 14, 15. Although not shown in the drawings, the low-temperature plasma generator 5 may have a plurality of high-voltage power sources 12 for supplying pulse voltages to each pair of first and second electrodes 14, 15.

The low-temperature plasma generator 5 generates low-temperature plasma in the exhaust gas, which is contained in the liquid flowing in the flow passage 1a, and the harmful gas in the exhaust gas is decomposed by this low-temperature plasma. In this embodiment, the main body 1 serves as a reactor for decomposing the harmful gas, which is contained in the liquid flowing in the flow passage 1a formed therein, by use of the low-temperature plasma. The harmful gas is decomposed by the low-temperature plasma generated in the liquid, and thus the exhaust gas treated is immediately cooled by the liquid. As a result, no cooling facility (e.g., water wall or scrubber), which is required in a conventional exhaust-gas treatment apparatus, is needed, and the exhaust-gas treatment apparatus can be downsized. Further, by-products, such as dust, and corrosive gas, which are generated by decomposing the harmful gas, are also immediately discharged from the main body 1 together with the liquid flowing in the flow passage 1a. For example, acidic gas, such as hydrofluoric acid which is generated by decomposing the harmful gas, is immediately dissolved in the liquid, diluted, and discharged into the discharge line 7. Therefore, corrosion damage in components of the exhaust-gas treatment apparatus 100 and adhesion of dust are suppressed. Further, the plasma itself for decomposing the harmful gas has a low temperature, and the first electrode 14 and the second electrode 15 are cooled by the liquid flowing in the flow passage 1a. As a result, wear and tear of the electrodes 14, 15 due to thermal dissolution and corrosion are suppressed, so that a running cost of the exhaust-gas treatment apparatus 100 can be reduced.

In one embodiment, some or all of outer surface of the first electrode 14 and/or the second electrode 15 may be coated with a dielectric material. The dielectric material enables the first electrode 14 and/or the second electrode 15 to be protected from the harmful gas contained in the exhaust gas and from the by-products generated by the decomposition of the harmful gas. Further, the dielectric material prevents localized wear and tear of the first electrode 14 and/or the second electrode 15, because the dielectric material prevents direct contact of the plasma with the conductive portions of the first electrode 14 and/or the second electrode 15.

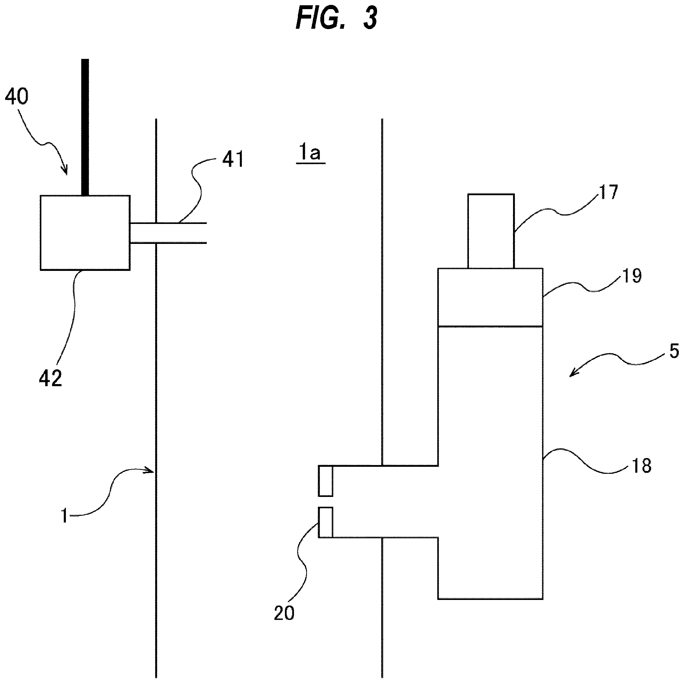

FIG. 3 is a schematic view showing a low-temperature plasma generator according to another embodiment. The low-temperature plasma generator 5 shown in FIG. 3 includes a microwave generator 17 capable of emitting microwaves, a waveguide (waveguide section) 18 for propagating the microwaves emitted from the microwave generator 17, a matching section (isolator) 19 located in the waveguide 18 to adjust impedance of the microwaves, and a slot antenna 20 for concentrating electric fields generated by the microwaves inside the waveguide 18. The slot antenna 20 is placed in the flow passage 1a of the main body 1. In this embodiment, microwaves concentrated to a surface of the slot antenna 20 generate electronic oscillations, thereby generating low-temperature plasma in the exhaust gas (bubbles of the exhaust gas) flowing in the flow passage 1a. The harmful gas in the exhaust gas is decomposed by the low-temperature plasma.

As shown in FIG. 3, the low-temperature plasma generator 5 may include a bubble generation mechanism 40 for generating bubbles in the flow passage 1a of the main body 1. The bubble generation mechanism 40 shown in FIG. 3 includes a bubble line 41 which communicates with the flow passage 1a of the main body 1, and supplies gas, which has become bubbles, to the flow passage 1a, and a bubble generator 42 disposed in the bubble line 41. Examples of the bubble generator 42 may include a microbubble generator, and an ultrasonic vibrator. The exhaust gas is supplied to the bubble line 41, and then is supplied to the flow passage 1a of the body 1 through the bubble line 41.

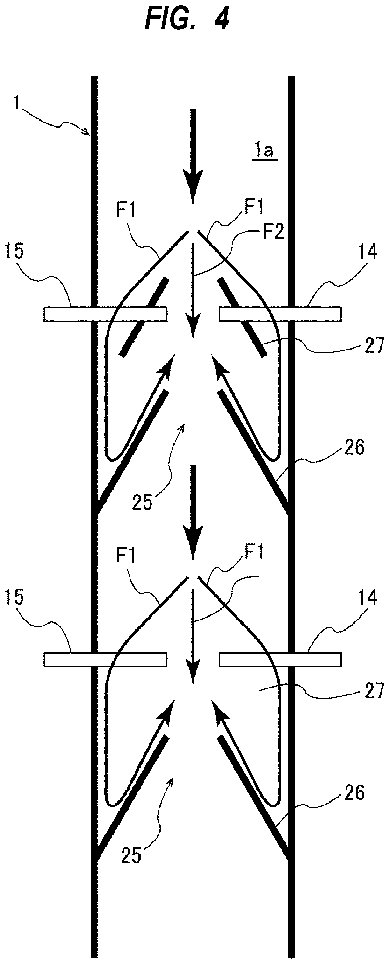

FIG. 4 is a schematic view showing an example of a recirculating flow mechanism arranged in the main body. The recirculating flow mechanism serves as a mechanism which, in order to efficiently decompose the harmful gas contained in the exhaust gas, reverses part of the liquid flowing in the flow passage 1a to thereby increase time during which the liquid and the exhaust gas remain in the low-temperature plasma generator 5.

The recirculating flow mechanism 25 shown in FIG. 4 includes a first taper tube 26 coupled to a wall surface of the flow passage 1a in the main body 1, and a second taper tube 27 located upstream of the first taper tube 26, as viewed in a flow direction of the liquid flowing in the flow passage 1a. The first taper tube 26 has a conical shape with an opening in a center thereof, and an end of the first taper tube 26 is coupled to the wall surface of the flow passage 1a without a gap. The end of the first taper tube 26 means a portion of the first taper tube 26 having a maximum diameter. On the other hand, the second taper tube 27 also has a conical shape with an opening in a center thereof, and an end of the second taper tube 27 is arranged with a gap from the wall surface of the flow passage 1a. In this embodiment, the second taper tube 27 is coupled to the main body 1 by a supporting member (not shown). The first taper tube 26 and the second taper tube 27 are arranged concentrically as viewed in a longitudinal cross-section of the flow passage 1a.

As the liquid and the exhaust gas pass through the second taper tube 27, the liquid and the exhaust gas are divided into a first flow F1 flowing over an outer surface of the second taper tube 27 toward the wall surface of the flow passage 1a and a second flow F2 flowing through a center opening of the second taper tube 27 lying in a central portion of the flow passage 1a. The first flow F1 is blocked by the first taper tube 26 from flowing in the flow passage 1a in an original direction thereof, and thus flows backward along the outer (top) surface of the first taper tube 26. As a result, the first flow F1 joins the second flow F2 flowing in the center of the flow passage 1a, thereby hindering the second flow F2. In this embodiment, the plasma generator 5 is configured to generate low-temperature plasma at a confluence portion of the first flow F1 and the second flow F2. Specifically, the first electrode 14 and the second electrode 15 extend through the wall surface of the second taper tube 27, and low-temperature plasma is generated inside the second taper tube 27. The recirculating flow mechanism 25 having such construction allows a time during which the exhaust gas remains around the first electrode 14 and the second electrode 15, where the exhaust gas is turned into low-temperature plasma, to be increased, thereby enabling the harmful gas in the exhaust gas to be efficiently decomposed.

As shown in FIG. 4, the recirculating flow mechanisms 25 may be provided in accordance with the number of pairs of the first electrode 14 and the second electrode 15 equipped in the low-temperature plasma generator 5.

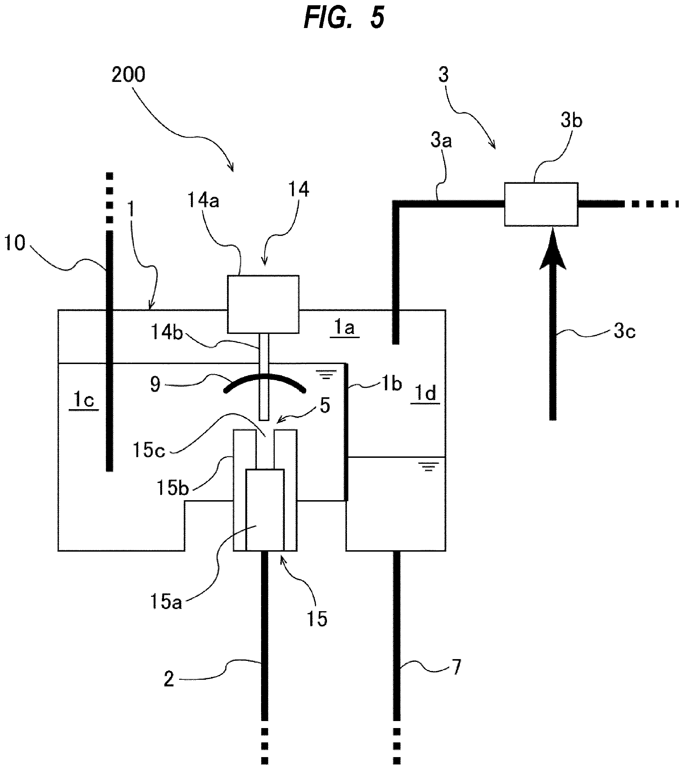

FIG. 5 is a schematic view showing the exhaust gas treatment apparatus according to another embodiment. Configuration of this embodiment, which is not specifically described, is the same as the configuration of the above-described embodiments, and thus duplicate descriptions thereof are omitted.

The exhaust-gas treatment apparatus 200 shown in FIG. 5 has the main body 1 configured as a tank having an overflow weir 1b. An internal space of the main body 1 is divided by the overflow weir 1b into a treatment section 1c in which the low-temperature plasma generator 5 is disposed, and an discharge section 1d to which the discharge line 7 is coupled. In this embodiment, the overflow weir 1b is a plate extending upward from an upper surface of a bottom wall of the main body 1, and a gap is formed between an upper end of the overflow weir 1b and a lower surface of a top wall of the main body 1. The flow passage 1a for the liquid to be formed in the main body 1 is the entire internal space of the main body 1 including the treatment section 1c and the discharge section 1d.

The liquid supply line 10 extends through an upper portion (in this embodiment, upper wall) of the main body 1 to the treatment section 1c. A tip of the liquid supply line 10, from which the liquid is discharged, lies lower than the top of the overflow weir 1b. The liquid is supplied from the upper portion of the main body 1 to the treatment section 1c of the main body 1. The liquid supplied to the treatment section 1c of the main body 1 is stored in the treatment section 1c until a liquid level thereof rises above the overflow weir 1b, and then the liquid flowing out over the overflow weir 1b flows into the discharge section 1d. The liquid flowing into the discharge section 1d is discharged from the main body 1 through the discharge line 7. Accordingly, a space above the overflow weir 1b in the main body 1 is filled with gas (atmosphere).

In the exhaust-gas treatment apparatus 200 shown in FIG. 5, the low-temperature plasma generator 5 generates low-temperature plasma in the gas contained in the liquid that fills the treatment section 1c. More specifically, the first electrode 14 of the low-temperature plasma generator 5 is composed of a first electrode holder 14a and at least one electrode rod 14b attached to the first electrode holder 14a, and the second electrode 15 has a second electrode body 15a and a nozzle portion 15b arranged to the second electrode body 15a. The nozzle portion 15b has at least one exhaust-gas inlet 15c formed therein, which is used for supplying the exhaust gas to the liquid flowing in the flow passage 1a. Further, a tip of the electrode rod 14b in the first electrode 14 is located in the treatment section 1c at a position lower than the upper end of the overflow weir 1b, and the exhaust-gas inlet 15c formed in the nozzle section 15b of the second electrode 15 is open to the treatment section 1c at a position lower than the tip of the electrode rod 14b in the first electrode 14.

Further, the exhaust-gas supply line 2 is coupled to the second electrode 15, and communicates with the exhaust-gas inlet 15c formed in the nozzle portion 15b of the second electrode 15 through the second electrode body 15a of the second electrode 15.

The suction device 3 in this embodiment has a suction line 3a coupled to the upper portion (in this embodiment, the upper wall) of the main body 1 to suck gas in the main body 1, an ejector 3b disposed in the suction line 3a, and a drive-fluid line 3c for supplying drive fluid to the ejector 3b. When the drive fluid is supplied to the ejector 3b through the drive-fluid line 3c, the internal space of the main body 1, i.e., the atmosphere of the flow passage 1a, becomes negative pressure through the suction line 3a. As a result, the exhaust gas is sucked into the flow passage 1a formed in the main body 1 through the exhaust-gas supply line 2. Although not shown in the drawings, the suction device 3 may have a suction pump instead of an ejector 3b. In this case, the drive-fluid line 3c is omitted.

When the suction device 3 is set in motion, the exhaust gas is sucked into the flow passage 1a through the exhaust-gas supply line 2 from the exhaust-gas inlet 15c of the second electrode 15, and at the same time as this operation, the harmful gas in the exhaust gas is decomposed by low-temperature plasma generated in the exhaust gas by use of the low-temperature plasma generator 5. The exhaust gas treated flows out with the liquid over the overflow weir 1b to the discharge section 1d, and is discharged from the main body 1 through the suction line 3a. In this embodiment, the exhaust-gas inlet 15c for introducing the exhaust gas into the flow passage 1a is integrated with the second electrode 15. Thus, all of the exhaust gas sucked into the liquid flowing in the flow passage 1a is in contact with the second electrode 15, resulting in an increase in the proportion of the exhaust gas that is turned into low-temperature plasma. Therefore, the decomposition rate (treatment efficiency) of harmful gas contained in the exhaust gas can be increased.

In this embodiment also, low-temperature plasma is generated in the exhaust gas contained in the liquid flowing in the flow passage 1a, and thus the harmful gas in the exhaust gas is decomposed by this low-temperature plasma. The harmful gas is decomposed by low-temperature plasma generated in the liquid, so that the exhaust gas treated is immediately cooled by the liquid. As a result, no cooling facility (e.g., scrubber), which is required in a conventional exhaust-gas treatment apparatus, is needed, and the exhaust-gas treatment apparatus can be downsized. Further, by-products, such as dust, and corrosive gas, which are generated by decomposing the harmful gas, are also immediately discharged from the main body 1 together with the liquid flowing in the flow passage 1a. Further, the plasma itself for decomposing the harmful gas has a low temperature, and the first electrode 14 and the second electrode 15 are cooled by the liquid flowing in the flow passage 1a. As a result, wear and tear of the electrodes 14, 15 due to thermal dissolution and corrosion are suppressed, so that a running cost of the exhaust-gas treatment apparatus 200 can be reduced.

As shown in FIG. 5, a control plate 9, which controls the flow of exhaust gas, may be provided opposite the exhaust-gas inlet 15c. The control plate 9 decreases a flow velocity of the exhaust gas sucked in from the exhaust-gas inlet 15c until the exhaust gas passes over the overflow weir 1b from the treatment section 1c, thereby increasing a time during which the exhaust gas remains between the first electrode 14 and second electrode 15, where the exhaust gas is turned into a low-temperature plasma. Therefore, the control plate 9 enables the treatment efficiency of the exhaust gas to be increased. The control plate 9 shown in FIG. 5 has an arch shape opening toward the second electrode 15. However, the shape of the control plate 9 is not limited to this embodiment. For example, the control plate 9 may have a bowl shape or a funnel shape. If the first electrode 14 has a single electrode rod 14b, the electrode rod 14b of the first electrode 14 preferably penetrates through a center of the control plate 9.

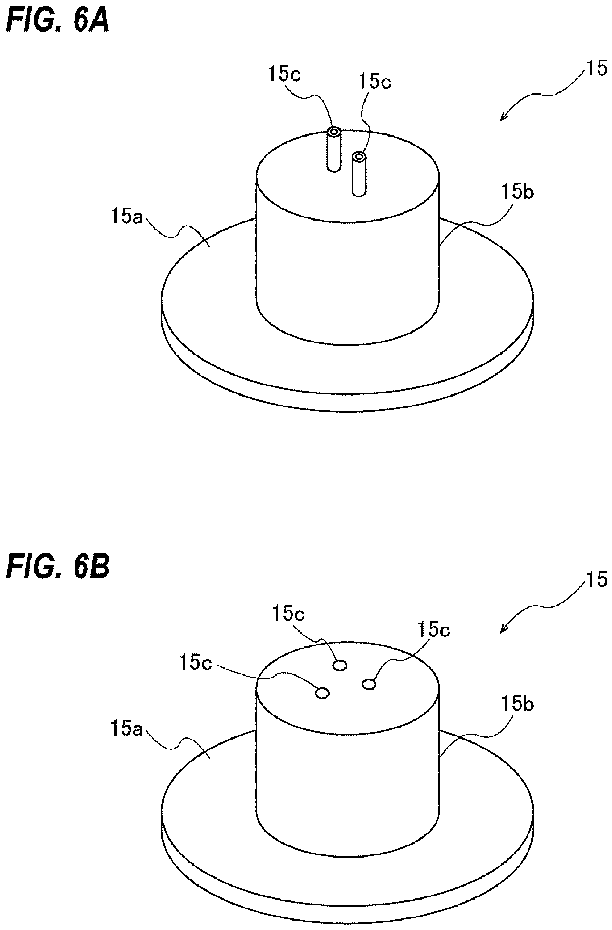

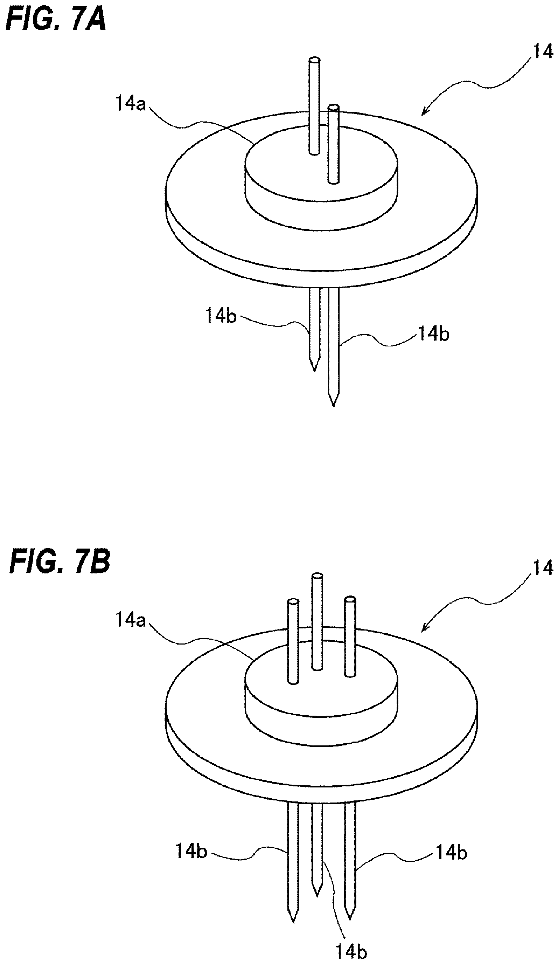

FIG. 6A is a perspective view showing the second electrode according to another embodiment, and FIG. 6B is a perspective view showing the second electrode according to still another embodiment. FIG. 7A is a perspective view showing the first electrode according to another embodiment, and FIG. 7B is a perspective view showing the first electrode according to still another embodiment. As shown in FIGS. 6A and 6B, the second electrode 15 may have a plurality of exhaust-gas inlets 15c. The second electrode 15 shown in FIG. 6A has two exhaust-gas inlets 15c. The second electrode 15 shown in FIG. 6B has three exhaust-gas inlets 15c, which are arranged in a triangular shape as a whole. Although not shown in the drawings, the number of exhaust-gas inlet 15c in the second electrode 15 may be more than three. For example, a number of exhaust-gas inlets 15c may be arranged in the second electrode 15 in an oval shape or triangular shape as a whole.

The second electrode 15 shown in FIG. 6A corresponds to the first electrode 14 having two electrode rods 14b shown in FIG. 7A. In this manner, the second electrode 15 preferably has the same number of exhaust-gas inlets 15c as the number of electrode rods 14b of the first electrode 14. In this case, a tip of each electrode rod 14b is preferably positioned on a central axis of each exhaust gas inlet 15c. In FIG. 6A, each exhaust gas inlet 15c is configured as a cylindrical body extending from an upper surface of the nozzle section 15b. The high-voltage power supply device 11 (see FIG. 5) may apply pulse voltages to the two electrode rods 14b simultaneously to generate two low-temperature plasmas simultaneously, or may apply pulse voltages to the two electrode rods 14b alternately to generate two low-temperature plasmas in different positions alternately.

Similarly, the second electrode 15 shown in FIG. 6B corresponds to the first electrode 14 having the three electrode rods 14b shown in FIG. 7B. More specifically, the second electrode 15 has the same number of exhaust gas inlets 15c as the number of electrode rods 14b of the first electrode 14, and a tip of each electrode rod 14b is positioned on a central axis of each exhaust gas inlets 15c. In FIG. 6B, each exhaust gas inlet 15c is formed in the upper surface of the nozzle section 15b. The high-voltage power supply device 11 (see FIG. 5) may apply pulse voltages to the three electrode rods 14b simultaneously to generate three low-temperature plasmas simultaneously, or may apply pulse voltages to the three electrode rods 14b alternately to generate three low-temperature plasmas in different positions alternately.

In this manner, the low-temperature plasma generator 5 has the first electrode 14 with a plurality of electrode rods 14b and the second electrode 15 with the same number of exhaust gas inlets 15c as those of the electrode rods 14b, thereby increasing an amount of exhaust gas that becomes low-temperature plasma. As a result, the decomposition rate (treatment efficiency) of harmful gas contained in the exhaust gas can be increased.

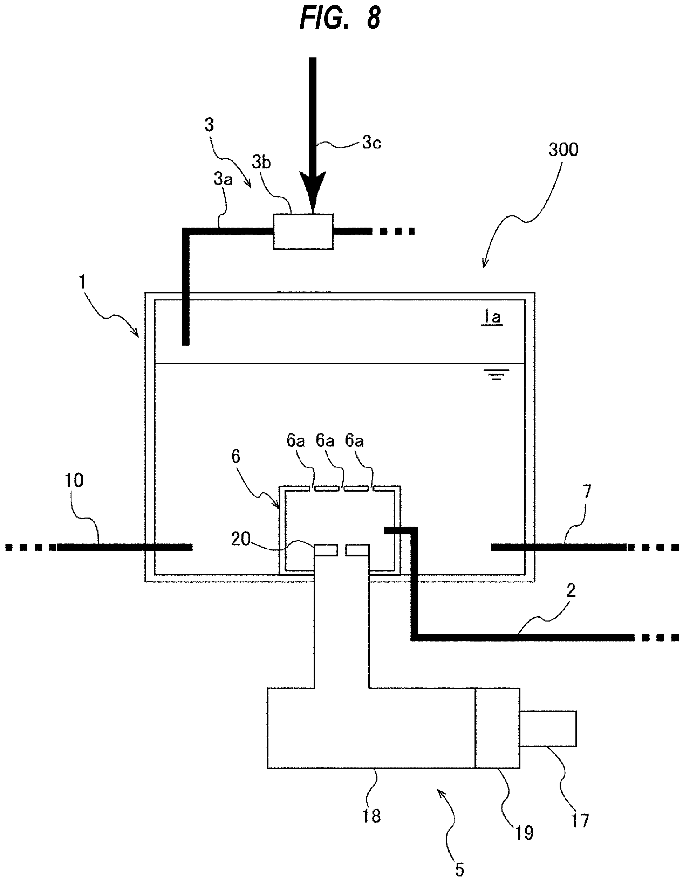

FIG. 8 is a schematic view showing the exhaust-gas treatment apparatus according to still other embodiment. Configuration of this embodiment, which is not specifically described, is the same as the configuration of the above-described embodiments, and thus duplicate descriptions thereof are omitted. The exhaust-gas treatment apparatus 300 shown in FIG. 8 differs from the above-described embodiment in that low-temperature plasma for decomposing the exhaust gas is generated in a gaseous atmosphere instead of in the liquid.

The exhaust-gas treatment apparatus 300 shown in FIG. 8 includes a reactor 6 disposed in the flow passage 1a formed in the main body 1. The exhaust-gas supply line 2 is coupled to the reactor 6, and supplies the exhaust gas into the reactor 6. In this embodiment, the exhaust-gas supply line 2 extends through a wall surface of the reactor 6, and a tip of the exhaust-gas supply line 2 is opened inside the reactor 6.

At least one discharge port 6a is formed in an upper wall of the reactor 6 to discharge the exhaust gas into the flow passage 1a. The exhaust gas supplied from the exhaust-gas supply line 2 to an internal space of the reactor 6 is discharged through each discharge port 6a into the flow passage 1a.

The low-temperature plasma generator 5 shown in FIG. 8 has the same configuration as the low-temperature plasma generator 5 described with reference to FIG. 3. A tip of the waveguide (waveguide section) 18 for propagating the microwaves emitted from the microwave generator 17 penetrates through the main body 1 and the reactor 6, and is located inside the reactor 6.

In the embodiment shown in FIG. 8, the low-temperature plasma generator 5 is configured as a device which utilizes the microwaves generated from the microwave generator 17 to generate low-temperature plasma in the exhaust gas. However, the embodiment is not limited to this example. For example, the low-temperature plasma generator 5 may be configured as a device having at least a pair of the first electrode 14 and the second electrode 15. In this case, some or all of the outer surfaces of the first electrode 14 and/or the second electrode 15 may be coated with a dielectric material.

The liquid supply line 10 and the discharge line 7 extend through side walls of the main body 1 until reaching the internal space of the main body 1, respectively. A flow rate of liquid supplied from the liquid supply line 10 to the flow passage 1a of the main body 1 and/or a flow rate of liquid discharged from the discharge line 7 is regulated so that the flow passage 1a is not completely filled with the liquid. In other words, there is gas (atmosphere) in an upper space of the flow passage 1a.

The suction device 3 in this embodiment has the same configuration as the suction device 3 described with reference to FIG. 5. More specifically, the suction device 3 has the suction line 3a coupled to the upper portion (in this embodiment, the upper wall) of the main body 1 to suck gas in the main body 1, the ejector 3b disposed in the suction line 3a, and the drive-fluid line 3c for supplying the drive fluid to the ejector 3b. When the drive fluid is supplied to the ejector 3b through the drive-fluid line 3c, the internal space of the main body 1, i.e., atmosphere of the flow passage 1a, becomes negative pressure through the suction line 3a. As a result, the exhaust gas is sucked into the flow passage 1a formed in the main body 1 through the reactor 6 and the exhaust-gas supply line 2. The flow rate of the exhaust gas supplied from the exhaust-gas supply line 2 by the suction device 3 is controlled so that the liquid flowing in the flow passage 1a does not intrude into the reactor 6. Although not shown in the drawings, the suction device 3 may have a suction pump instead of the ejector 3b. In this case, the drive-fluid line 3c is omitted.

When the suction device 3 is set in motion, the exhaust gas is sucked into the reactor 6 through the exhaust-gas supply line 2, and at the same time, is decomposed by low-temperature plasma generated by use of the low-temperature plasma generator 5. The exhaust gas treated is immediately discharged into the flow passage 1a through each discharge port 6a of the reactor 6, and is immediately cooled by the liquid flowing in the flow passage 1a. As a result, no cooling facility (e.g., scrubber), which is required in a conventional exhaust-gas treatment apparatus, is needed, and the exhaust-gas treatment apparatus can be downsized. Further, by-products, such as dust, and corrosive gas that are generated by decomposing the harmful gas, are also immediately discharged from the main body 1 together with the liquid flowing in the flow passage 1a. Further, the plasma itself for decomposing the harmful gas has a low temperature, and thus wear and tear of the reactor 6 are suppressed, so that a running cost of the exhaust-gas treatment apparatus 300 can be reduced.

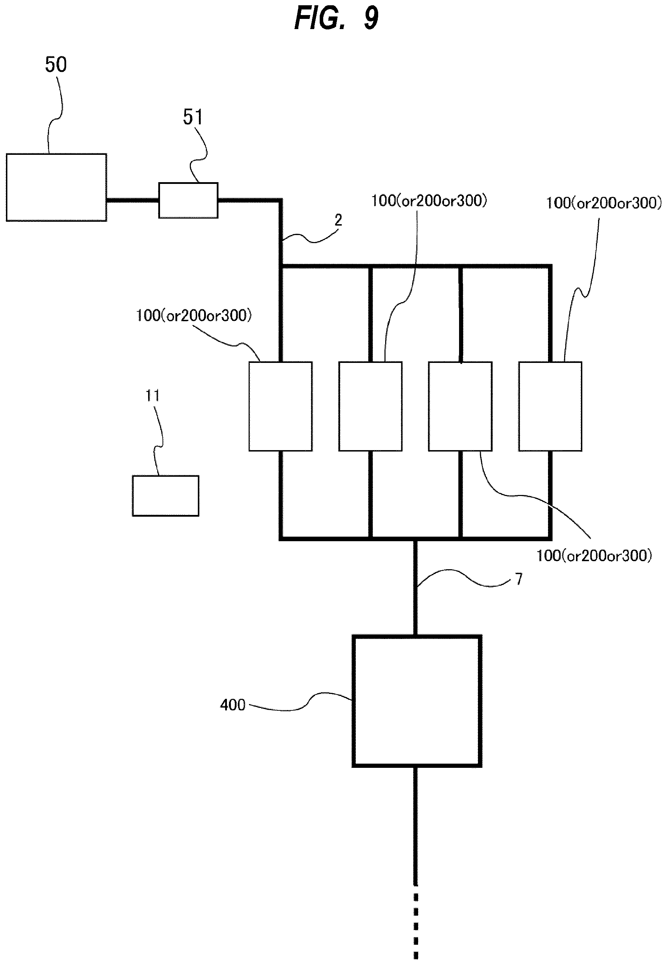

FIG. 9 is a view showing an example of an exhaust-gas treatment process system in which the exhaust-gas treatment apparatuses are arranged. In the exhaust-gas treatment process system shown in FIG. 9, the exhaust gas is discharged from a process chamber 50 of a semiconductor manufacturing apparatus by use of a vacuum pump 51. The exhaust-gas supply line 2 extends from the vacuum pump 51 to the main body 1 of the exhaust-gas treatment apparatus 100 (or 200 or 300). In the embodiment shown in FIG. 9, a plurality (four) of exhaust gas treatment apparatuses 100 (or 200 or 300) are coupled to one process chamber 50, but the number of process chambers 50 and the number of exhaust gas treatment apparatuses 100 (or 200 or 300) included in the exhaust-gas treatment process system are not limited to this embodiment. For example, one exhaust-gas treatment apparatus 100 (or 200 or 300) may be coupled to one process chamber 50, or one exhaust-gas treatment apparatus 100 (or 200 or 300) may be coupled to a plurality of process chambers 50.

Further, in the embodiment shown in FIG. 9, one high-voltage power supply device 11 is couple to four exhaust-gas treatment apparatuses 100 (or 200 or 300), but the number of high-voltage power supply devices 11 included in the exhaust-gas treatment process system is not limited to this embodiment. For example, one high-voltage power supply device 11 may be coupled to one exhaust gas treatment apparatus 100 (or 200 or 300).

Further, as shown in FIG. 9, the discharge line 7 for the exhaust-gas treatment apparatuses 100 (or 200 or 300) may be coupled to other exhaust-gas treatment apparatus 400. Examples of other exhaust-gas treatment apparatus 400 may include a wet type exhaust-gas treatment apparatus, a combustion type exhaust-gas treatment apparatus, or a dry type exhaust-gas treatment apparatus. The wet-type exhaust-gas treatment apparatus is, for example, a scrubber, and the dry-type exhaust-gas treatment apparatus is, for example, an exhaust-gas treatment apparatus having a treatment tank filled with an adsorbent that adsorbs harmful gas.

Although not shown in the drawings, the vacuum pump 51 may be coupled to the exhaust-gas treatment apparatus 400, such as wet type exhaust-gas treatment apparatus, combustion type exhaust-gas treatment apparatus, or dry type exhaust-gas treatment apparatus, and then the exhaust-gas treatment apparatus 100 (or 200 or 300) may be coupled to the exhaust-gas treatment apparatus 400. In this case, the exhaust-gas supply line 2 extends from the exhaust-gas treatment apparatus 400 to the main body 1 of the exhaust-gas treatment apparatus 100 (or 200 or 300), and the exhaust gas treated in the exhaust-gas treatment apparatus 400 is treated by the exhaust-gas treatment apparatus 100 (or 200 or 300).

Further, although not shown in the drawings, the exhaust-gas supply line 2 may be incorporated into the vacuum pump 51 or may be integrated with the vacuum pump 51. In these cases, the main body 1 of the exhaust-gas treatment apparatus 100 (or 200 or 300) is directly coupled to the vacuum pump 51.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

## Claims

1. An exhaust-gas treatment apparatus for making harmful gas contained in an exhaust gas harmless, comprising:
a main body in which a flow passage is formed for a liquid to flow;
an exhaust-gas supply line to be coupled to the main body, and for supplying the exhaust gas to the flow passage through which the liquid flows;
a suction device configured to suck the exhaust gas from the exhaust-gas supply line into the flow passage;
a low-temperature plasma generator for generating low-temperature plasma in the flow passage to decompose the harmful gas; and
a discharge line for discharging the exhaust gas, which has passed through the low-temperature plasma generator, from the main body.

2. An exhaust-gas treatment apparatus for making harmful gas contained in an exhaust gas harmless, comprising:
a main body in which a flow passage is formed for a liquid to flow;
an exhaust-gas supply line to be coupled to the main body, and for supplying the exhaust gas to the flow passage through which the liquid flows;
a suction device configured to suck the exhaust gas from the exhaust-gas supply line into the flow passage;
a low-temperature plasma generator for generating low-temperature plasma in the exhaust-gas supply line to decompose the harmful gas; and
a discharge line for discharging the exhaust gas, containing the harmful gas which has been decomposed by the low-temperature plasma, from the main body.

3. The exhaust-gas treatment apparatus according to claim 1, wherein the suction device includes an ejector arranged in the flow passage upstream of the low-temperature plasma generator as viewed in a flow direction of the liquid, and
a driving fluid for the ejector is the liquid.

4. The exhaust-gas treatment apparatus according to claim 1, wherein the suction device includes an ejector arranged in the discharge line, and
supplying a drive fluid to the ejector causes the internal space of the main body to be depressurized, thereby sucking the exhaust gas from the exhaust-gas supply line into the main body.

5. The exhaust-gas treatment apparatus according to claim 3, further comprising:
a recirculating flow mechanism configured to reverse part of the liquid and the exhaust gas flowing in the flow passage to thereby increase a time during which the liquid and the exhaust gas remain in the low-temperature plasma generator;
wherein the recirculating flow mechanism includes:
a first taper tube coupled to a wall surface of the flow passage, and having a reduced diameter toward an upstream side of the flow direction of the liquid; and
a second taper tube arranged upstream of the first taper tube as viewed in the flow direction of the liquid and with a gap from the flow passage, and dividing the liquid and the exhaust gas into a first flow toward a wall surface of the flow passage and a second flow flowing in a central portion of the flow passage; and
the first taper tube causes the first flow to flow back in the flow passage toward the second flow.

6. The exhaust-gas treatment apparatus according to claim 3 or 4, wherein the plasma generator includes:
a high-voltage power supply device; and
at least a pair of first electrode and second electrode disposed in the flow passage; and
the high voltage power supply device causes low temperature plasma to be generated between the first electrode and the second electrode.

7. The exhaust-gas treatment apparatus according to claim 3 or 4, wherein the plasma generator includes:
a microwave generator capable of emitting microwaves;
a waveguide for propagating the microwaves;
a matching section located in the waveguide to adjust impedance of the microwaves; and
a slot antenna for concentrating electric fields generated by the microwaves; and
the exhaust gas in the liquid is turned into low-temperature plasma at a surface of the slot antenna.

8. The exhaust-gas treatment apparatus according to claim 6, wherein some or all of outer surface of the first electrode and/or the second electrode is coated with a dielectric material.

9. The exhaust-gas treatment apparatus according to claim 1 or 2, wherein the harmful gas is fluorine compounds, nitrogen compounds, or silane compounds, and
the liquid is pure water, ultrapure water, ion-exchanged water, or electrolytic solution.

10. The exhaust-gas treatment apparatus according to claim 1 or 2, wherein, during treating of the exhaust gas, an ambience of an internal space of the main body is maintained at atmospheric pressure or quasi-atmospheric pressure.

11. The exhaust-gas treatment apparatus according to claim 1 or 2, wherein the exhaust-gas supply line extends from a vacuum pump coupled to a process chamber of semiconductor manufacturing apparatus to the main body, or extends from an exhaust-gas treatment apparatus coupled to the vacuum pump to the main body.

12. The exhaust-gas treatment apparatus according to claim 1 or 2, wherein the exhaust-gas supply line is incorporated into or integrated with a vacuum pump coupled to a process chamber of a semiconductor manufacturing apparatus, and
the main body is directly coupled to the vacuum pump.

13. The exhaust-gas treatment apparatus according to claim 11, wherein the discharge line extends from the main body to a wet type exhaust gas treatment apparatus, a combustion type exhaust gas treatment apparatus, or a dry type exhaust gas treatment apparatus.

14. The exhaust-gas treatment apparatus according to claim 6, wherein at least one exhaust gas inlet for introducing the exhaust gas into the liquid is formed in the second electrode, and
the exhaust-gas supply line is coupled to the second electrode in which the exhaust-gas inlet is formed.

15. The exhaust-gas treatment apparatus according to claim 6, wherein the plasma generator includes:
a plurality of pairs of first electrode and the second electrode, or
the first electrode having a plurality of electrode rods and the second electrode.
